(19) Europäisches Patentamt
European Patent Office
Office européen des brevets

(11) **EP 2 449 170 B1**

(12) **FASCICULE DE BREVET EUROPEEN**

(45) Date de publication et mention de la délivrance du brevet:
**11.11.2015 Bulletin 2015/46**

(21) Numéro de dépôt: **10728671.8**

(22) Date de dépôt: **05.07.2010**

(51) Int Cl.:
***D07B 1/06*** *(2006.01)*   ***D07B 1/16*** *(2006.01)*
***D07B 7/14*** *(2006.01)*

(86) Numéro de dépôt international:
**PCT/EP2010/059525**

(87) Numéro de publication internationale:
**WO 2011/000964 (06.01.2011 Gazette 2011/01)**

(54) **CABLE MULTITORONS DONT LES TORONS ELEMENTAIRES SONT DES CABLES A DEUX COUCHES GOMMES IN SITU**

MEHRLITZIGES VERSTÄRKUNGSKABEL, WOBEI DIE EINZELNEN LITZEN MIT ROHGUMMI BEI DEREN SCHLAGEN VERSEHEN WEREN

MULTI STRAND CABLE, WHEREIN EACH STRAND IS RUBBERIZED IN-SITU

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.07.2009 FR 0954595**

(43) Date de publication de la demande:
**09.05.2012 Bulletin 2012/19**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **GAUTHIER, Jacques**
**F-63370 Lempdes (FR)**
• **BARGUET, Henri**
**F-63430 Les Martres D'Artière (FR)**
• **BOISSEAU, Sandra**
**F-63720 Chappes (FR)**
• **POTTIER, Thibaud**
**F-63000 Clermont-Ferrand (FR)**

(74) Mandataire: **Ribière, Joel**
**Manufacture Française des Pneumatiques Michelin**
**23, place des Carmes-Déchaux**
**DGD/PI - F35 - Ladoux**
**63040 Clermont-Ferrand Cedex (FR)**

(56) Documents cités:
**WO-A1-2009/011397     WO-A1-2009/080583
WO-A1-2010/012411     FR-A1- 2 925 922
FR-A1- 2 925 923       JP-A- 2006 218 934
JP-A- 2009 024 268     US-A- 5 139 874**

• **WOLF E ET AL: "ALTERNATIVE KONSTRUKTIONEN VON STAHLZUGTRAGERN IN FORDERGURTEN", KAUTSCHUK UND GUMMI - KUNSTSTOFFE, HUTHIG VERLAG, HEIDELBERG, DE, vol. 46, no. 9, 1 septembre 1993 (1993-09-01), pages 727-731, XP000397379, ISSN: 0948-3276**
• **Anonymous: "Steel Cord", , 29 April 2014 (2014-04-29), XP055115675, Retrieved from the Internet: URL:http://www.bekaert.com/~/media/Files/D ownload Files/Automotive/Steelcord nomenclature system.pdf [retrieved on 2014-04-29]**

**Description**

La présente invention est relative aux câbles multitorons (*« multistrand ropes »*) utilisables notamment pour le renforcement de bandages pneumatiques pour véhicules industriels lourds tels que véhicules poids-lourd ou génie civil.

Elle est également relative aux câbles du type « gommés in situ », c'est-à-dire gommés de l'intérieur, pendant leur fabrication même, par du caoutchouc ou une composition de caoutchouc à l'état non réticulé (cru), avant incorporation de ces derniers aux articles en caoutchouc tels que pneumatiques qu'ils sont destinés à renforcer.

Elle se rapporte également aux pneumatiques et aux armatures de renforcement du sommet encore appelées « ceintures » de ces pneumatiques, particulièrement au renforcement des ceintures de pneumatiques pour véhicules industriels.

Un pneumatique radial comporte de manière connue une bande de roulement, deux bourrelets inextensibles, deux flancs reliant les bourrelets à la bande de roulement et une ceinture disposée circonférentiellement entre l'armature de carcasse et la bande de roulement. Cette ceinture est constituée de diverses nappes (ou "couches") de caoutchouc renforcées ou non par des éléments de renforcement ("renforts") tels que des câbles ou des monofilaments, du type métalliques ou textiles.

La ceinture est généralement constituée de plusieurs nappes de ceinture superposées, dites parfois nappes "de travail" ou nappes "croisées", dont les câbles de renforcement, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian. Ces nappes croisées sont généralement complétées par diverses autres nappes ou couches de caoutchouc auxiliaires, de largeurs variables selon les cas, comportant ou non des renforts métalliques ; on citera en particulier les nappes dites "de protection" chargées de protéger le reste de la ceinture des agressions externes, des perforations, ou encore des nappes dites "de frettage" comportant des renforts métalliques ou non orientés sensiblement selon la direction circonférentielle (nappes dites "à zéro degré"), qu'elles soient radialement externes ou internes par rapport aux nappes croisées.

Une telle ceinture de pneumatique doit satisfaire de manière connue à différentes exigences, souvent contradictoires, notamment :

- être la plus rigide possible à faible déformation, car elle contribue d'une manière substantielle à rigidifier le sommet du pneumatique ;
- avoir une hystérèse aussi basse que possible, pour d'une part minimiser l'échauffement en roulage de la zone interne du sommet et d'autre part réduire la résistance au roulement du pneumatique, synonyme d'économie de carburant ;
- posséder enfin une endurance élevée, vis-à-vis en particulier du phénomène de séparation, fissuration des extrémités des nappes croisées dans la zone d'épaule du pneumatique, connu sous le terme de "clivage", ce qui exige notamment des câbles métalliques qui renforcent les nappes de ceinture de présenter une résistance élevée à la fatigue en compression, le tout dans une atmosphère plus ou moins corrosive.

La troisième exigence est particulièrement forte pour les pneumatiques pour véhicules industriels tels que véhicules poids-lourd ou engins de génie civil, conçus notamment pour pouvoir être rechapés une ou plusieurs fois lorsque leurs bandes de roulement atteignent un degré d'usure critique après un roulage ou usage prolongé.

En outre, les ceintures de pneumatiques pour véhicules industriels comportent on le sait une ou plusieurs nappes ou couches sommet dites "de protection", situées sous la bande de roulement et surmontant la ou les nappes sommet de travail, chargées de protéger le reste de la ceinture des agressions externes, déchirures ou autres perforations.

Ces nappes ou couches de protection doivent être suffisamment souples et déformables pour, d'une part, épouser au mieux la forme de l'obstacle sur lequel la ceinture appuie lors du roulage, et, d'autre part s'opposer à la pénétration de corps étrangers radialement à l'intérieur de celle-ci. La satisfaction de tels critères exige, de manière connue, l'utilisation dans ces couches de protection de renforts ou câbles présentant une haute élasticité ainsi qu'une énergie à la rupture élevée.

Pour le renforcement des nappes sommet de protection, des nappes de frettage comme des nappes sommet de travail de pneumatiques pour véhicules industriels lourds, on utilise généralement aujourd'hui des câbles à torons, notamment des câbles multitorons à une seule couche (i.e., sans âme centrale d'un ou plusieurs autres torons) de construction K x (L+M), dont les K torons élémentaires sont assemblés, enroulés simultanément en hélice en une seule couche, selon un pas d'assemblage $P_K$ ; chacun des K torons élémentaires à deux couches, de construction L+M, comporte lui-même une pluralité de fils d'acier également enroulés ensemble en hélice selon deux couches concentriques (une couche interne de L fils, une couche externe de M fils).

De tels câbles à torons de construction K x (L+M), notamment du type à haute élongation, sont bien connus et ont été décrits dans un grand nombre de documents brevet, en particulier pour renforcer des nappes sommet de protection de pneumatiques pour véhicules industriels tels que poids-lourd ou génie civil (voir par exemple EP 1000074, US 6475636, US 7458200, WO 2004/003287 ou US 2005/0183808, WO 2004/033789 ou US 7089726, ou encore RD (Research Disclosure) No 33877, juin 1992,488-492).

De manière bien connue de l'homme du métier, ces câbles à torons doivent être imprégnés autant que possible par le caoutchouc dans les ceintures de pneumatiques qu'ils renforcent, de sorte que ce caoutchouc pénètre dans la maximum d'espaces entre les fils constituant les torons. Si cette pénétration est insuffisante, il reste alors des canaux vides le long des torons, et les agents corrosifs, par exemple l'eau, susceptibles de pénétrer dans les pneumatiques par exemple à la suite de coupures ou d'autres agressions de le ceinture du pneumatique, cheminent le long de ces canaux à travers ladite ceinture. La présence de cette humidité joue un rôle important en provoquant de la corrosion et en accélérant les processus de fatigue (phénomènes dits de "fatigue-corrosion"), par rapport à une utilisation en atmosphère sèche.

Tous ces phénomènes de fatigue que l'on regroupe généralement sous le terme générique de "fatigue-fretting-corrosion" sont à l'origine d'une dégénérescence progressive des propriétés mécaniques des câbles et torons et peuvent affecter, pour les conditions de roulage les plus sévères, la durée de vie de ces derniers.

Par ailleurs, il est connu qu'une bonne pénétration du câble par du caoutchouc permet, grâce à un volume d'air emprisonné dans le câble qui est moindre, de réduire les temps de cuisson des pneumatiques ("durée sous presse" réduite).

Les torons élémentaires constitutifs de ces câbles multitorons, au moins pour certains, ont toutefois pour inconvénient qu'ils ne sont pas pénétrables jusqu'à coeur.

C'est notamment le cas des torons élémentaires de construction 3+M ou 4+M, à cause de la présence d'un canal ou capillaire au centre des trois fils d'âme, qui reste vide après imprégnation externe par du caoutchouc et donc propice, par une sorte d'effet "de mèche", à la propagation de milieux corrosifs tels que l'eau. Cet inconvénient des torons de construction 3+N est bien connu, il a été exposé par exemple dans les demandes de brevet WO 01/00922, WO 01/49926, WO 2005/071157, WO 2006/013077.

Pour résoudre ce problème de pénétrabilité jusqu'à coeur des câbles 3+M, la demande de brevet US 2002/160213 a certes proposé la réalisation de torons du type gommés in situ. Le procédé proposé ici consiste à gainer individuellement (c'est-à-dire isolément, "fil à fil") avec du caoutchouc à l'état cru, en amont du point d'assemblage (ou point de torsion) des trois fils, un seul ou préférentiellement chacun des trois fils pour l'obtention d'une couche interne gainée de caoutchouc, avant la mise en place ultérieure des M fils de la couche externe par câblage autour de la couche interne ainsi gainée.

Cette demande ne donne aucune information concernant la construction des torons 3+M, en particulier ni sur les pas d'assemblage ni sur les taux de gomme de remplissage à utiliser. En outre, le procédé proposé pose de nombreux problèmes.

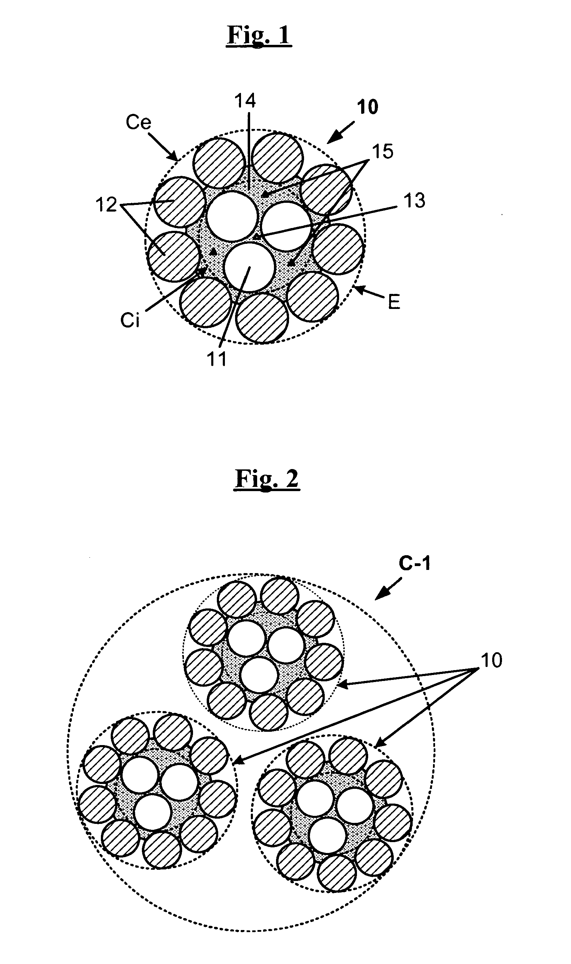

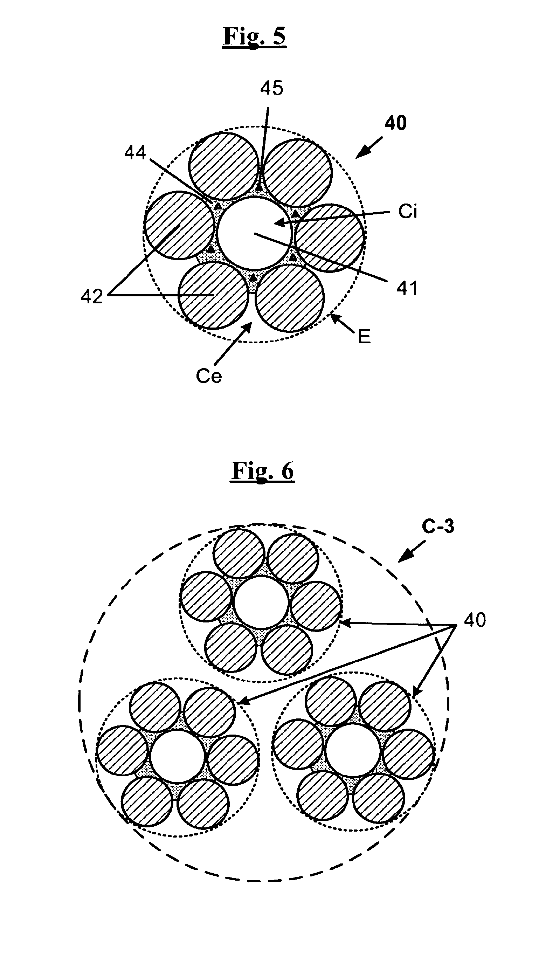

Tout d'abord le gainage d'un seul fil sur trois (comme illustré par exemple aux figures 11 et 12 de cette demande US 2002/160213), ne permet pas de garantir un remplissage suffisant par la gomme du toron final, et donc d'obtenir une résistance à la corrosion satisfaisante. Ensuite, le gainage fil à fil de chacun des trois fils (comme illustré par exemple aux figures 2 et 5 de ce document), s'il conduit effectivement à un remplissage du toron, conduit à l'emploi d'une quantité trop importante de gomme. Le débordement de gomme à la périphérie du toron final devient alors rédhibitoire dans des conditions de câblage et gommage industrielles.

En raison du très fort pouvoir collant du caoutchouc à l'état cru (c'est-à-dire non réticulé), le toron ainsi gommé devient inutilisable en raison d'un effet collant parasite sur les outils de fabrication ou entre les spires de toron lors de l'enroulage de ce dernier sur une bobine de réception, sans parler de l'impossibilité finale de calandrer correctement le câble. On rappelle ici que le calandrage consiste à transformer le câble, par incorporation entre deux couches de caoutchouc à l'état cru, en un tissu caoutchouté métallique servant de produit semi-fini pour toute fabrication ultérieure, par exemple pour la confection d'un pneumatique.

Un autre problème posé par le gainage isolé de chacun des trois fils est l'encombrement important imposé par l'emploi de trois têtes d'extrusion. En raison d'un tel encombrement, la fabrication de câbles à couches cylindriques (c'est-à-dire à pas $p_1$ et $p_2$ différents d'une couche à l'autre, ou à pas $p_1$ et $p_2$ identiques mais avec des sens de torsion différents d'une couche à l'autre) doit être nécessairement réalisée en deux opérations discontinues : (i) gainage individuel des fils puis câblage et enroulage de la couche interne dans un premier temps, (ii) câblage de la couche externe autour de la couche interne dans un deuxième temps. Toujours en raison du fort pouvoir collant du caoutchouc à l'état cru, l'enroulement et le stockage intermédiaire de la couche interne exigent l'emploi d'intercalaires ainsi que des pas de trancannage importants lors de l'enroulement sur bobine intermédiaire, pour éviter un collage parasite entre les couches bobinées ou entre les spires d'une même couche.

WO2009/011397 divulgue des câbles multitorons à plusieurs couches de structure (J+K)*(L+M) En particulier, WO 2009/011397 divulgue des câbles de structure (1+6)*(3+9) comprenant des fils présentant un diamètre égal à 0,34 mm.

Toutes les contraintes ci-dessus sont fortement pénalisantes du point de vue industriel et antinomiques de la recherche de cadences de fabrication élevées.

Poursuivant leurs recherches, les Demanderesses ont découvert un nouveau câble multitorons de construction K x (L+M) dont les K torons élémentaires, grâce à une structure spécifique obtenue selon un procédé de fabrication particulier, permettent de pallier les inconvénients précités.

En conséquence, un premier objet de l'invention est un câble métallique multitorons à une seule couche et de construction K x (L+M), utilisable notamment pour le renforcement de ceintures de pneumatiques pour véhicules industriels, constitué de K torons élémentaires assemblés en hélice selon un pas d'hélice $P_K$, chaque toron élémentaire :

   o consistant en un câble à deux couches (Ci, Ce) de construction L+M, gommé in situ, comportant une couche interne (Ci) constituée de L fils de diamètre $d_1$, L variant de 1 à 4, et une couche externe (Ce) de M fils, M étant égal ou supérieur à 5, de diamètre $d_2$ assemblés en hélice selon un pas $p_2$ autour de la couche interne (Ci) ;

   o et présentant les caractéristiques suivantes ($d_1$, $d_2$ et $p_2$ étant exprimés en mm) :

-    $0,10 < d_1 < 0,50$ ;
-    $0,10 < d_2 < 0,50$ ;
-    $3 < p_2 < 10$ ;
-    sa couche interne (Ci) est gainée par une composition de caoutchouc dite "gomme de remplissage" ;
-    sur toute longueur de toron élémentaire égale à K fois $P_K$, la gomme de remplissage est présente dans chacun des capillaires délimités par les L fils de la couche interne (Ci) et les M fils de la couche externe (Ce), ainsi que, lorsque L est égal à 3 ou 4, dans le canal central délimité par les L fils de la couche interne (Ci) ;
-    le taux de gomme de remplissage dans ledit toron élémentaire est compris entre 5 et 40 mg par g de toron élémentaire ;
-    chaque toron élémentaire est dépourvu de gomme de remplissage à sa périphérie.

L'invention concerne également l'utilisation d'un tel câble multitorons pour le renforcement d'articles ou de produits semi-finis en caoutchouc, par exemple des nappes, des tuyaux, des courroies, des bandes transporteuses, des pneumatiques.

Le câble multitorons de l'invention est tout particulièrement destiné à être utilisé comme élément de renforcement d'une ceinture de pneumatique destiné à des véhicules industriels tels que véhicules "poids lourd" - i.e., métro, bus, engins de transport routier (camions, tracteurs, remorques), véhicules hors-la-route -, engins agricoles ou de génie civil, autres véhicules de transport ou de manutention.

L'invention concerne en outre ces articles ou produits semi-finis en caoutchouc eux-mêmes lorsqu'ils sont renforcés par un câble multitorons conforme à l'invention, en particulier les pneumatiques notamment destinés aux véhicules industriels.

L'invention ainsi que ses avantages seront aisément compris à la lumière de la description et des exemples de réalisation qui suivent, ainsi que des figures 1 à 5 relatives à ces exemples qui schématisent, respectivement :

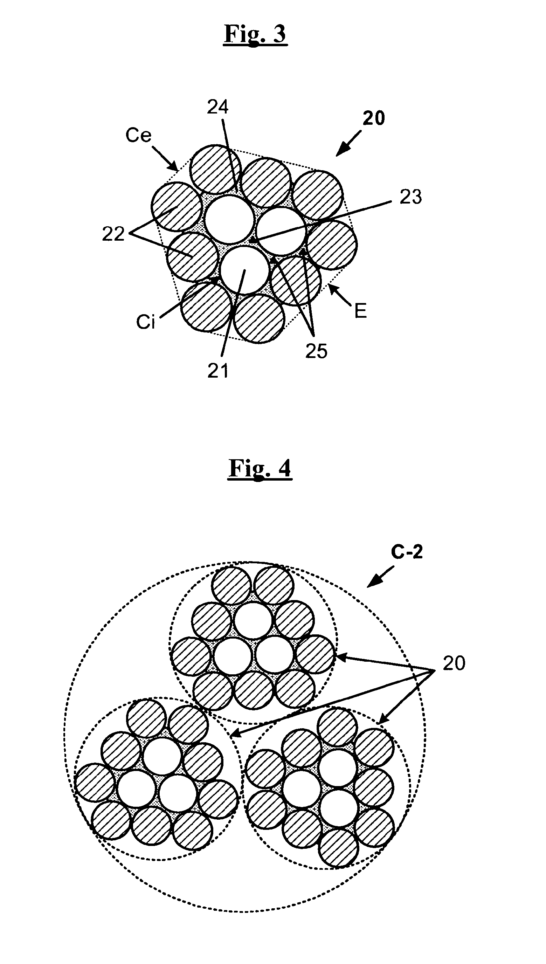

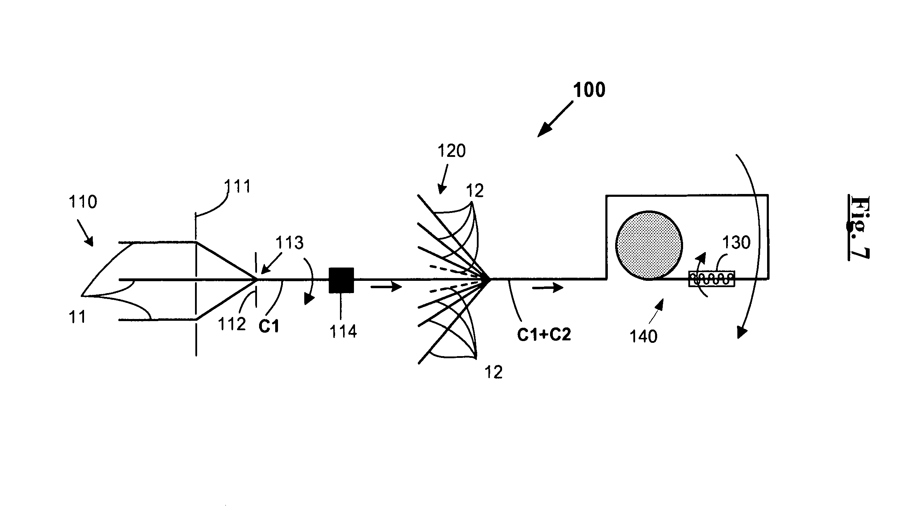

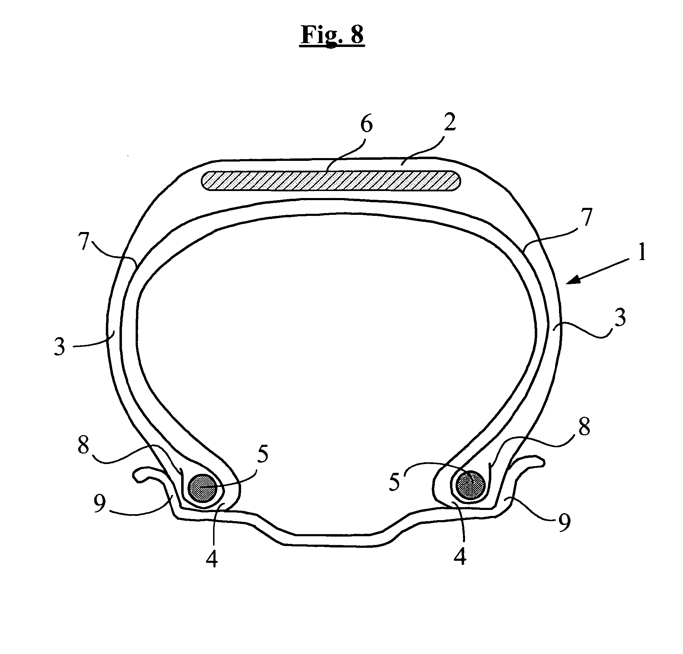

-    en coupe transversale, un toron de construction 3+9, du type à couches cylindriques, utilisable dans un câble multitorons conforme à invention (Fig. 1) ;
-    en coupe transversale, un exemple de câble multitorons conforme à l'invention, de construction 3x(3+9), incorporant le toron de la figure 1 (Fig. 2) ;
-    en coupe transversale, un toron de construction 3+9, du type compact, utilisable dans un câble multitorons conforme à l'invention (Fig. 3) ;
-    en coupe transversale, un exemple de câble multitorons conforme à l'invention, de construction 3x(3+9), incorporant le toron de la figure 3 (Fig. 4) ;
-    en coupe transversale, un autre exemple de toron, de construction 1+6, utilisable dans un câble multitorons conforme à l'invention (Fig. 5) ;
-    en coupe transversale, un autre exemple de câble multitorons conforme à l'invention, de construction 3x(1+6), incorporant le toron de la figure 3 (Fig. 6) ;
-    un exemple d'installation de retordage et gommage in situ utilisable pour la fabrication de torons élémentaires destinés à la fabrication du câble multitorons de l'invention (Fig. 7) ;
-    en coupe radiale, une enveloppe de pneumatique pour véhicule industriel à armature de carcasse radiale, conforme ou non à l'invention dans cette représentation générale (Fig. 8).

**I. MESURES ET TESTS**

I-1. Mesures dynamométriques

Pour ce qui concerne les fils et câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984.

Concernant les compositions de caoutchouc diénique, les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté E10 et exprimé en MPa (conditions normales de température et d'hygrométrie selon la norme ASTM D 1349 de 1999).

I-2. Test de perméabilité à l'air

Ce test permet de déterminer la perméabilité longitudinale à l'air des torons élémentaires testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est ici réalisé sur des torons extraits des câbles multitorons bruts de fabrication, ayant subi un enrobage et une cuisson ultérieurs, ou encore extraits des pneumatiques ou des nappes de caoutchouc que renforcent ces câbles multitorons, donc déjà enrobés de caoutchouc à l'état cuit.

Dans le premier cas (câbles multitorons bruts de fabrication), les torons extraits doivent être, préalablement au test, enrobés de l'extérieur par une gomme dite d'enrobage. Pour cela, une série de 10 torons disposés parallèlement (distance inter-torons : 20 mm) est placée entre deux skims (deux rectangles de 80 x 200 mm) d'une composition de caoutchouc à l'état cru, chaque skim ayant une épaisseur de 3,5 mm ; le tout est alors bloqué dans un moule, chacun des torons étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de torons ainsi enrobés, sous forme de parallélépipèdes de dimensions 7 mm x 7 mm x $L_t$, pour caractérisation.

On utilise comme gomme d'enrobage une composition de caoutchouc conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) ; le module E10 de la gomme d'enrobage est de 10 MPa environ.

Le test est réalisé sur une longueur prédéterminée de toron $L_t$ (par exemple égale à K fois $P_K$ , à 3 cm voire à 2 cm), enrobé donc par sa composition de caoutchouc (ou gomme d'enrobage) environnante, de la manière suivante : on envoie de l'air à l'entrée du toron, sous une pression de 1 bar, et on mesure le volume d'air à la sortie, à l'aide d'un débitmètre (calibré par exemple de 0 à 500 cm$^3$/min). Pendant la mesure, l'échantillon de toron est bloqué dans un joint étanche comprimé (par exemple un joint en mousse dense ou en caoutchouc) de telle manière que seule la quantité d'air traversant le toron d'une extrémité à l'autre, selon son axe longitudinal, est prise en compte par la mesure ; l'étanchéité du joint étanche est contrôlée préalablement à l'aide d'une éprouvette de caoutchouc pleine, c'est-à-dire sans torons.

Le débit d'air moyen mesuré (moyenne sur les 10 éprouvettes) est d'autant plus faible que l'imperméabilité longitudinale du toron est élevée. La mesure étant faite avec une précision de $\pm$ 0,2 cm$^3$/min, les valeurs mesurées inférieures ou égales à 0,2 cm$^3$/min sont considérées comme nulles ; elles correspondent à un toron qui peut être qualifié d'étanche (totalement étanche) à l'air selon son axe (i.e., dans sa direction longitudinale).

I-3. Taux de gomme de remplissage

La quantité de gomme de remplissage est mesurée par différence entre le poids du toron initial (donc gommé in situ) et le poids du toron (donc celui de ses fils) dont la gomme de remplissage a été éliminée par un traitement électrolytique approprié.

Un échantillon de toron (longueur 1 m), bobiné sur lui-même pour réduire son encombrement, constitue la cathode d'un électrolyseur (reliée à la borne négative d'un générateur), tandis que l'anode (reliée à la borne positive) est constituée d'un fil de platine. L'électrolyte consiste en une solution aqueuse (eau déminéralisée) comportant 1 mole par litre de carbonate de sodium.

L'échantillon, plongé complètement dans l'électrolyte, est mis sous tension pendant 15 min sous un courant de 300 mA. Le toron est ensuite retiré du bain, rincé abondamment avec de l'eau. Ce traitement permet à la gomme de se détacher facilement du toron (si ce n'est pas le cas, on continue l'électrolyse pendant quelques minutes). On élimine soigneusement la gomme, par exemple par simple essuyage à l'aide d'un tissu absorbant, tout en détordant un à un les fils du toron. Les fils sont de nouveau rincés à l'eau puis plongés dans un bécher contenant un mélange d'eau déminéralisée (50%) et d'éthanol (50%) ; le bécher est plongé dans une cuve à ultrasons pendant 10 min. Les fils ainsi dépourvus de toute trace de gomme sont retirés du bécher, séchés sous un courant d'azote ou d'air, et enfin pesés.

On en déduit par le calcul le taux de gomme de remplissage dans le toron, exprimé en mg (milligramme) de gomme de remplissage par g (gramme) de toron initial, et moyenné sur 10 mesures (c'est-à-dire sur 10 mètres de toron au total).

## II. DESCRIPTION DETAILLEE DE L'INVENTION

Dans la présente description, sauf indication expresse différente, tous les pourcentages (%) indiqués sont des % massiques.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Câble multitorons de l'invention

Le câble métallique multitorons de l'invention est à un seule couche et a donc pour construction K x (L+M) c'est-à-dire qu'il est constitué d'un nombre K de torons élémentaires assemblés, enroulés ensemble en hélice (en une seule couche) selon un pas d'hélice $P_K$.

Chacun des K torons élémentaires consiste lui-même en un câble à deux couches (Ci, Ce) de construction L+M, gommé in situ, comportant une couche interne (Ci) constituée de L fils de diamètre $d_1$, L variant de 1 à 4, et une couche externe (Ce) de M fils, M étant égal ou supérieur à 5, de diamètre $d_2$ enroulés ensemble en hélice selon un pas $p_2$ autour de la couche interne (Ci).

Chacun de ces K torons élémentaires présente en outre les caractéristiques suivantes ($d_1$, $d_2$ et $p_2$ étant exprimés en mm) :

- $0,10 < d_1 < 0,50$ ;
- $0,10 < d_2 < 0,50$;
- $3 < p_2 < 10$ ;
- sa couche interne (Ci) est gainée par une composition de caoutchouc dite "gomme de remplissage" ;
- sur toute longueur de toron élémentaire égale à K fois $P_K$, la gomme de remplissage est présente dans chacun des capillaires délimités par les L fils de la couche interne (Ci) et les M fils de la couche externe (Ce), ainsi que, lorsque L est égal à 3 ou 4, dans le canal central délimité par les L fils de la couche interne (Ci) ;
- le taux de gomme de remplissage dans ledit toron élémentaire est compris entre 5 et 40 mg par g de toron élémentaire ;
- chaque toron élémentaire est dépourvu de gomme de remplissage à sa périphérie.

Chaque toron élémentaire peut ainsi être qualifié de câble gommé in situ, c'est-à-dire qu'il est gommé de l'intérieur, pendant sa fabrication même (donc à l'état brut de fabrication), par la gomme de remplissage ; en d'autres termes, chacun des capillaires ou interstices (les deux termes interchangeables désignant les vides, espaces libres en l'absence de gomme de remplissage) situés entre, délimités par les L fils de la couche interne (Ci) et les M fils de la couche externe (Ce), est rempli au moins en partie, de manière continue ou non selon l'axe du toron, par la gomme de remplissage. En outre, le canal ou capillaire central formé par les 3 ou 4 fils de la couche interne Ci, lorsque L est égal à 3 ou 4, est lui aussi pénétré par de la gomme de remplissage.

Selon un mode de réalisation préférentiel, sur toute portion de toron élémentaire égale à K fois $P_K$ (plus préférentiellement égale à 3 cm, plus préférentiellement encore égale à 2 cm), le canal central (lorsque L est égal à 3 ou 4) et chaque capillaire ou interstice décrits ci-dessus comportent au moins un bouchon de gomme ; en d'autres termes et préférentiellement, il existe au moins un bouchon de gomme tous les K fois $P_K$ (plus préférentiellement tous les 3 cm, plus préférentiellement encore tous les 2 cm) de toron élémentaire, qui obstrue le canal central et chaque capillaire ou interstice du toron externe de telle manière que, au test de perméabilité à l'air (selon paragraphe I-2), chaque toron externe du câble multitorons de l'invention présente un débit d'air moyen inférieur à 2 $cm^3$/min, plus préférentiellement inférieur à ou au plus égal à 0,2 $cm^3$/min.

Chaque toron élémentaire a pour autre caractéristique essentielle que son taux de gomme de remplissage est compris entre 5 et 40 mg de gomme par g de toron.

En dessous du minimum indiqué, il n'est pas possible de garantir que, pour toute longueur de toron élémentaire égale à K fois $P_K$ (plus préférentiellement égale à 3 cm, encore plus préférentiellement égale à 2 cm), la gomme de remplissage soit bien présente, au moins en partie, dans chacun des interstices ou capillaire du toron élémentaire, tandis qu'au-delà du maximum indiqué, on s'expose aux différents problèmes précédemment décrits dus au débordement de la gomme de remplissage à la périphérie du toron. Pour toutes ces raisons, on préfère que le taux de gomme de remplissage soit compris entre 5 et 35 mg, plus préférentiellement encore compris dans un domaine de 10 à 30 mg par g de toron.

Un tel taux de gomme de remplissage et son contrôle dans les limites indiquées ci-dessus n'est rendu possible que grâce à la mise en oeuvre d'un procédé de retordage-gommage spécifique, adapté à la géométrie de chaque toron élémentaire de construction L+M, procédé qui sera exposé en détail ultérieurement.

La mise en oeuvre de ce procédé spécifique, tout en permettant l'obtention d'un toron dont la quantité de gomme de remplissage est maîtrisée, garantit la présence de cloisons internes (continues ou discontinues dans l'axe du toron) ou bouchons de gomme dans chaque toron élémentaire, notamment dans son canal central lorsque L est égal à 3 ou 4, en nombre suffisant ; ainsi, chaque toron élémentaire devient étanche à la propagation, le long du toron, de tout fluide corrosif tel que l'eau ou l'oxygène de l'air, supprimant ainsi l'effet de mèche décrit en introduction du présent mémoire.

Selon un mode de réalisation particulièrement préférentiel de l'invention, la caractéristique suivante est vérifiée : sur toute longueur de toron élémentaire égale à K fois $P_K$ (plus préférentiellement égale à 3 cm, plus préférentiellement encore égale à 2 cm), chaque toron élémentaire est étanche ou quasiment étanche à l'air dans la direction longitudinale.

Au test de perméabilité à l'air décrit au paragraphe I-2, un toron élémentaire L+M dit "étanche à l'air" est caractérisé par un débit d'air moyen inférieur ou au plus égal à 0,2 $cm^3$/min tandis qu'un toron élémentaire L+M dit "quasiment étanche à l'air" est caractérisé par un débit d'air moyen inférieur à 2 $cm^3$/min, de préférence inférieur à 1 $cm^3$/min.

Pour un compromis optimisé entre résistance, faisabilité, rigidité et endurance en compression du toron, on préfère que les diamètres des fils des couches Ci et Ce, identiques ou non d'une couche à l'autre, soient compris entre 0,15 et 0,35 mm.

Les fils des couches Ci et Ce peuvent avoir un diamètre identique ou différent d'une couche à l'autre. On peut utiliser des fils de même diamètre d'une couche à l'autre (soit $d_1 = d_2$), ce qui simplifie notamment leur fabrication et réduit leur coût.

Selon un mode de réalisation préférentiel, dans chaque toron élémentaire, $p_2$ est compris dans un domaine de 12 à 25 mm.

Selon un autre mode de réalisation préférentiel, $P_K$ est compris entre 3 et 15 mm, plus préférentiellement compris dans un domaine de 4 à 12 mm.

On rappelle ici que de manière connue le pas « p » représente la longueur, mesurée parallèlement à l'axe du toron élémentaire ou du câble multitorons, au bout de laquelle un fil ou un toron élémentaire, respectivement, ayant ce pas effectue un tour complet autour dudit axe.

Selon un mode de réalisation préférentiel, dans chaque toron élémentaire, L est égal à 1 c'est-à-dire qu'un fil unique constitue la couche interne (Ci) de chaque toron élémentaire.

Selon un autre mode de réalisation possible, dans chaque toron élémentaire, L est différent de 1 et, dans un tel cas, les L fils de diamètre $d_1$ sont enroulés en hélice selon un pas $p_1$ qui vérifie préférentiellement la relation :

$$0,5 \leq p_1 / p_2 \leq 1 \ .$$

Plus préférentiellement, dans un tel cas, dans chaque toron élémentaire, $p_1$ est compris entre 3 et 10 mm. Selon un autre mode de réalisation plus préférentiel, dans chaque toron élémentaire, $p_1$ est égal à $p_2$.

Selon un autre mode de réalisation préférentiel, chaque toron élémentaire vérifie la relation suivante :

$$0,7 \leq d_1 / d_2 \leq 1,3 \ ,$$

plus préférentiellement encore la relation suivante :

$$0,8 \leq d_1 / d_2 \leq 1,2 \ .$$

Selon un autre mode de réalisation préférentiel de l'invention, dans chaque toron élémentaire, les M fils de la couche externe (Ce) sont enroulés en hélice soit à un pas différent, soit dans un sens de torsion différent, soit à un pas et un sens de torsion tous deux différents, comparativement aux L fils de la couche interne (Ci) lorsque L est différent de 1.

C'est notamment le cas pour des torons à couches cylindriques tels que décrits par exemple à la figure 1, dans lesquels les deux couches Ci et Ce sont enroulées dans le même sens de torsion (S/S ou Z/Z) mais à un pas différent (soit $p_1 \neq p_2$). Dans de tels torons à couches cylindriques, la compacité est telle que la section transversale de chaque toron élémentaire a un contour qui est cylindrique et non polygonal.

Toutefois, selon un autre mode de réalisation possible de l'invention, dans chaque toron élémentaire, les M fils de la couche externe (Ce) peuvent être enroulés en hélice au même pas et dans le même sens de torsion que les L fils de la couche interne (Ci), lorsque L est différent de 1, pour l'obtention d'une toron élémentaire du type compact (c'est-à-dire à contour polygonal) tel que représenté par exemple à la figure 3.

La couche externe Ce de chacun des K torons élémentaires est préférentiellement une couche saturée c'est-à-dire que, par définition, il n'existe pas suffisamment de place dans cette couche pour y ajouter au moins un ($M_{max}$+1)ème fil de diamètre $d_2$, $M_{max}$ représentant le nombre maximal de fils enroulables en une couche autour de la couche interne Ci. Cette construction a pour avantage de limiter le risque de débordement de gomme de remplissage à sa périphérie et d'offrir, pour un diamètre donné de toron élémentaire, une résistance plus élevée.

Ainsi, le nombre M de fils peut varier dans une très large mesure selon le mode de réalisation particulier de l'invention, par exemple de 5 à 14 fils, étant entendu que L peut varier de 1 à 4 et que le nombre maximal $M_{max}$ de fils sera augmenté si leur diamètre $d_2$ est réduit comparativement au diamètre $d_1$ des L fils d'âme, afin de conserver préférentiellement la couche externe dans un état saturé.

Ainsi, selon un mode de réalisation préférentiel possible, dans chacun des K torons élémentaires, L est égal à 1 et M est plus préférentiellement égal à 5, 6 ou 7 ; en d'autres termes, chaque toron élémentaire est choisi dans le groupe des câbles de constructions 1+5, 1+6 ou 1+7. Plus préférentiellement, dans ce cas, M est égal à 6.

Selon un autre mode de réalisation préférentiel de l'invention, dans chacun des K torons élémentaires, L est égal à 2 et M est plus préférentiellement égal à 7, 8 ou 9 ; en d'autres termes, chaque toron élémentaire est choisi dans le groupe des câbles de constructions 2+7, 2+8 ou 2+9. Plus préférentiellement, dans ce cas, M est égal à 8.

Selon un autre mode de réalisation préférentiel de l'invention, dans chacun des K torons élémentaires, L est égal à 3 et M est plus préférentiellement égal à 8, 9 ou 10 ; en d'autres termes, chaque toron élémentaire est choisi dans le groupe des câbles de constructions 3+8, 3+9 ou 3+10. Plus préférentiellement, dans ce cas, M est égal à 9.

Selon un autre mode de réalisation préférentiel de l'invention, dans chacun des K torons élémentaires, L est égal à 4 et M est plus préférentiellement égal à 8, 9, 10 ou 11 ; en d'autres termes, chaque toron élémentaire est choisi dans le groupe des câbles de constructions 4+8, 4+9, 4+10 ou 4+11. Plus préférentiellement, dans ce cas, M est égal à 9 ou à 10.

Parmi tous les torons élémentaires préférentiels ci-dessus, les fils des deux couches (Ci, Ce) peuvent avoir le même diamètre (soit $d_1 = d_2$) ou des diamètres différents (soit $d_1 \neq d_2$) d'une couche (Ci) à l'autre (Ce).

Selon un autre mode de réalisation particulièrement préférentiel, les K torons élémentaires constitutifs du câble multitorons de l'invention sont enroulés en hélice dans le même sens de torsion que les M fils de la couche externe (Ce) de chaque toron élémentaire, ceci afin de favoriser l'élasticité du câble de l'invention.

Comme déjà dit précédemment, les torons élémentaires du câble multitorons de l'invention, comme tous les câbles à couches, peuvent être de deux types, à savoir du type compact ou du type à couches cylindriques.

Préférentiellement, lorsque L est différent de 1, tous les fils des couches Ci et Ce sont enroulés dans le même sens de torsion, c'est-à-dire soit dans la direction S (disposition "S/S"), soit dans la direction Z (disposition "Z/Z"). L'enroulement dans le même sens des couches Ci et Ce permet avantageusement de minimiser les frottements entre ces deux couches et donc l'usure des fils qui les constituent. Plus préférentiellement encore, les deux couches Ci et Ce sont enroulées dans le même sens (S/S ou Z/Z) et à un pas différent (de préférence $p_1 < p_2$), pour l'obtention d'un toron élémentaire du type à couches cylindriques tel que représenté par exemple à la figure 1.

La figure 1 schématise, en coupe perpendiculaire à l'axe du toron (supposé rectiligne et au repos), un exemple d'un toron préférentiel utilisable dans le câble multitorons de l'invention, ayant pour construction 3+9.

Ce toron (10) est du type à couches cylindriques, c'est-à-dire que les fils (11, 12) de ses couches interne et externe (Ci, Ce) sont soit enroulés au même pas ($p_1 = p_2$) mais dans un sens différent (S/Z ou Z/S), soit enroulés à un pas différent ($p_1 \# p_2$) quelles que soient les directions de torsion (S/S ou Z/Z ou S/Z ou Z/S). De manière connue, ce type de construction a pour conséquence que les fils sont disposés selon deux couches (Ci et Ce) adjacentes et concentriques, tubulaires, donnant au toron (et à ses deux couches) un contour externe E (représenté en pointillés) qui est cylindrique et non polygonal.

On voit sur cette figure 1 que la gomme de remplissage (14), tout en écartant les fils très légèrement, remplit au moins en partie (ici, dans cet exemple, totalement) le canal central (13) délimité par les trois fils (11) de la couche interne (Ci) ainsi que chaque capillaire ou interstice (15) (à titre d'exemple, certains d'entre eux sont symbolisés par un triangle) situé d'une part entre les 3 fils (11) de la couche interne (Ci) et les M fils (12) de la couche externe (Ce), ces fils étant pris au moins 3 par 3.

Selon un mode de réalisation préférentiel, dans chaque toron élémentaire de construction L+M, la gomme de remplissage s'étend d'une manière continue autour de la couche interne (Ci) qu'elle recouvre.

Le nombre K de torons élémentaires constitutifs du câble multitorons de l'invention est préférentiellement égal à 3, 4 ou 5. Plus préférentiellement, K est égal à 3.

Selon un mode de réalisation particulier et préférentiel, K est égal à 3 et L est égal à 1, ledit câble de l'invention ayant donc pour construction particulière 3x(1+M), M étant notamment égal à 5, 6 ou 7.

Selon un autre mode de réalisation particulier et préférentiel, K est égal à 3 et L est égal à 2, ledit câble de l'invention ayant donc pour construction particulière 3x(2+M), M étant notamment égal à 7, 8 ou 9.

Selon un autre mode de réalisation particulier et préférentiel, K est égal à 3 et L est égal à 3, ledit câble de l'invention ayant donc pour construction particulière 3x(3+M), M étant notamment égal à 8, 9 ou 10.

Selon un autre mode de réalisation particulier et préférentiel, K est égal à 3 et L est égal à 4, ledit câble de l'invention ayant donc pour construction particulière 3x(4+M), M étant notamment égal à 8, 9, 10 ou 11.

La figure 2 schématise, en coupe perpendiculaire à l'axe du câble (supposé également rectiligne et au repos), un exemple préférentiel d'un tel câble multitorons (noté C-1) conforme à l'invention, ayant pour construction 3 x (3+9). Dans cet exemple, chacun des 3 torons élémentaires a la même construction (3+9) et correspond au toron élémentaire (10) précédemment décrit à la figure 1. Ses 3 torons (10) constitutifs pourraient être au contact l'un de l'autre ; de préférence ils ne le sont pas, ce qui confère un allongement structural As plus important au câble multitorons de l'invention.

Ce câble multitorons de l'invention, grâce au gommage in situ de ses torons individuels, présente on le voit une forte pénétration interne par la gomme de remplissage (14), ce qui lui confère une endurance améliorée vis-à-vis de la "fatigue corrosion".

La figure 3 schématise, en coupe perpendiculaire à l'axe du toron (supposé rectiligne et au repos), un exemple d'un autre toron préférentiel utilisable dans le câble multitorons de l'invention, ayant aussi pour construction 3+9.

Ce toron (20) est du type à couches cylindriques, c'est-à-dire que les fils (21, 22) de ses couches interne et externe (Ci, Ce) sont soit enroulés au même pas ($p_1 = p_2$) mais dans un sens différent (S/Z ou Z/S), soit enroulés à un pas différent ($p_1 \# p_2$) quelles que soient les directions de torsion (S/S ou Z/Z ou S/Z ou Z/S). De manière connue, ce type de construction a pour conséquence que les fils sont disposés selon deux couches (Ci et Ce) adjacentes et concentriques, tubulaires, donnant au toron (et à ses deux couches) un contour externe E (représenté en pointillés) qui polygonal et non cylindrique.

On voit sur cette figure 3 que la gomme de remplissage (24), tout en écartant les fils très légèrement, remplit au moins en partie (ici, dans cet exemple, totalement) le canal central (23) délimité par les trois fils (21) de la couche interne (Ci) ainsi que chacun des capillaires ou interstices (25) (à titre d'exemple, certains d'entre eux sont symbolisés par un triangle) situés entre les 3 fils (21) de la couche interne (Ci) et les 9 fils (22) de la couche externe (Ce), ces fils étant pris 3 par 3 ; au total 12 capillaires (25) sont ainsi présents dans cet exemple de toron élémentaire 3+9, auxquels s'ajoute le canal central.

La figure 4 schématise, en coupe perpendiculaire à l'axe du câble (supposé également rectiligne et au repos), un autre exemple de câble multitorons (noté C-2) conforme à l'invention, ayant pour construction 3 x (3+9). Dans cet exemple, chacun des 3 torons élémentaires a la même construction (3+9) et correspond au toron élémentaire (20) précédemment décrit à la figure 3. Ses 3 torons (20) constitutifs sont dans cet exemple au contact l'un de l'autre ; selon un autre mode de réalisation préférentiel, ils pourraient ne pas être au contact l'un de l'autre, ce qui confère un allongement structural As plus important au câble multitorons. Ce câble C-2 multitorons, grâce au gommage in situ de ses torons individuels, présente on le voit une forte pénétration interne par la gomme de remplissage (24), ce qui lui confère une endurance améliorée vis-à-vis de la "fatigue corrosion".

La figure 5 schématise un autre exemple d'un toron (40) préférentiel utilisable dans le câble multitorons de l'invention, ayant pour construction 1+6 ; dans ce cas, $d_1$ est légèrement supérieur à $d_2$. On voit que la gomme de remplissage (44) remplit, au moins en partie chaque interstice ou cavité formé par le fil central (41) et les six fils externes (42) qui lui sont immédiatement adjacents ; au total, 6 interstices ou capillaires (45) (représentés par un triangle) sont ainsi présents dans cet exemple de toron 1+6.

La figure 6 schématise quant à elle un autre exemple préférentiel d'un câble multitorons conforme à l'invention (noté C-3), ayant pour construction 3 x (1+6). Dans cet exemple, chacun des 3 torons élémentaires a la même construction (1+6) correspondant au toron élémentaire (40) précédemment décrit à la figure 5. Ses 3 torons (40) constitutifs pourraient être au contact l'un de l'autre ; de préférence ils ne le sont pas, ce qui confère un allongement structural As plus important au câble multitorons de l'invention. Ce câble multitorons C-3, grâce au gommage in situ de ses torons individuels, présente une forte pénétration interne par la gomme de remplissage (44).

Les câbles multitorons de l'invention sont préférentiellement du type "élastiques" (qualifiés aussi souvent de câbles "HE" pour haute élongation), c'est-à-dire qu'ils vérifient par définition, dans la présente demande, au moins les deux caractéristiques suivantes :

$$As > 1,0 \% \; ; \; At > 3,5 \%.$$

Plus préférentiellement, At est supérieur à 4%.

On rappelle que de manière bien connue de l'homme du métier l'allongement total à la rupture (At) d'un câble métallique élastique est la somme de trois allongements distincts (At = As + Ae + Ap) :

- un allongement structural As, résultant de la construction, aération même du câble multitorons et/ou de ses torons élémentaires ainsi que de leur élasticité propre, le cas échéant d'une préformation imposée à un ou plusieurs de ces torons et/ou fils constitutifs ;
- un allongement élastique Ae, résultant de l'élasticité même du métal des fils métalliques, pris individuellement (loi de Hooke) ;
- un allongement plastique Ap, résultant de la plasticité (déformation irréversible au-delà de la limite d'élasticité) du métal de ces fils métalliques pris individuellement.

Les procédés de fabrication des câbles du type HE sont bien connus de l'homme du métier, ils ont été décrits par exemple dans la demande WO 2004/003287 précitée.

La présente invention concerne bien entendu les câbles multitorons précédemment décrits tant à l'état cru (leur gomme de remplissage étant alors non vulcanisée) qu'à l'état cuit (leur gomme de remplissage étant alors vulcanisée). On préfère toutefois utiliser le câble multitorons de l'invention avec une gomme de remplissage à l'état cru jusqu'à son incorporation ultérieure dans le produit semi-fini ou produit fini tel que pneumatique auquel il est destiné, de manière à favoriser la liaison au cours de la vulcanisation finale entre la gomme de remplissage et la matrice de caoutchouc environnante (par exemple la gomme de calandrage).

Par câble ou toron métallique, on entend par définition dans la présente demande un câble ou toron formé de fils constitués majoritairement (c'est-à-dire pour plus de 50% en nombre de ces fils) ou intégralement (pour 100% des fils) d'un matériau métallique. Les fils sont préférentiellement en acier, plus préférentiellement en acier au carbone. Mais il est bien entendu possible d'utiliser d'autres aciers, par exemple un acier inoxydable, ou d'autres alliages.

Lorsqu'un acier au carbone est utilisé, sa teneur en carbone (% en poids d'acier) est de préférence comprise entre 0,4% et 1,2%, notamment entre 0,5% et 1,1% ; ces teneurs représentent un bon compromis entre les propriétés mécaniques requises pour le pneumatique et la faisabilité des fils. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les torons utilisés dans le câble multitorons de l'invention sont préférentiellement en acier au carbone et possèdent une résistance en traction (Rm) de préférence supérieure à 2500 MPa, plus préférentiellement supérieure à 3000 MPa. L'allongement total à la rupture (noté At) de chaque toron constitutif du câble de l'invention, somme de ses allongements structural, élastique et plastique, est de préférence supérieur à 2,0%, plus préférentiellement au moins égal à 2,5%.

L'élastomère (ou indistinctement "caoutchouc", les deux étant considérés comme synonymes) de la gomme de remplissage est préférentiellement un élastomère diénique, choisi plus préférentiellement dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La gomme de remplissage peut contenir un seul ou plusieurs élastomère(s) notamment diénique(s), ce dernier ou ces derniers pouvant être utilisé(s) en association avec tout type d'élastomère synthétique autre que diénique, voire avec des polymères autres que des élastomères.

La gomme de remplissage est préférentiellement du type réticulable, c'est-à-dire qu'elle comprend par définition un système de réticulation adapté pour permettre la réticulation de la composition lors de sa cuisson (i.e., son durcissement et non sa fusion) ; ainsi, dans un tel cas, cette composition de caoutchouc peut être qualifiée d'infusible, du fait qu'elle ne peut pas être fondue par chauffage à quelque température que ce soit. De préférence, dans le cas d'une composition de caoutchouc diénique, le système de réticulation de la gaine de caoutchouc est un système dit de vulcanisation, c'est-à-dire à base de soufre (ou d'un agent donneur de soufre) et d'au moins un accélérateur de vulcanisation. A ce système de vulcanisation de base peuvent s'ajouter divers activateurs de vulcanisation connus. Le soufre est utilisé à un taux préférentiel compris entre 0,5 et 10 pce, plus préférentiellement compris entre 1 et 8 pce, l'accélérateur de vulcanisation, par exemple un sulfénamide, est utilisé à un taux préférentiel compris entre 0,5 et 10 pce, plus préférentiellement compris entre 0,5 et 5,0 pce.

Mais l'invention s'applique également aux cas où la gomme de remplissage est dépourvue de soufre et même de tout autre système de réticulation, étant entendu que pourrait suffire, pour sa propre réticulation, le système de réticulation ou vulcanisation qui est présent dans la matrice de caoutchouc que le câble de l'invention est destiné à renforcer, et susceptible de migrer par contact de ladite matrice environnante vers la gomme de remplissage.

La gomme de remplissage peut comporter également, outre ledit système de réticulation, tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage, des agents anti-vieillissement, des antioxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide tels que décrits notamment dans la demande WO 2005/113666.

Le taux de charge renforçante, par exemple du noir de carbone ou une charge inorganique renforçante telle que silice, est de préférence supérieur à 50 pce, par exemple compris entre 60 et 140 pce. Il est plus préférentiellement supérieur à 70 pce, par exemple compris entre 70 et 120 pce. Comme noirs de carbone, par exemple, conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice ($SiO_2$), notamment les silice précipitées ou pyrogénées présentant une surface BET inférieure à 450 $m^2$/g, de préférence de 30 à 400 $m^2$/g.

L'homme de l'art saura, à la lumière de la présente description, ajuster la formulation de la gomme de remplissage afin d'atteindre les niveaux de propriétés (notamment module d'élasticité) souhaités, et adapter la formulation à l'application spécifique envisagée.

Selon un premier mode de réalisation de l'invention, la formulation de la gomme de remplissage peut être choisie identique à la formulation de la matrice de caoutchouc que le câble de l'invention est destiné à renforcer ; ainsi, il n'y a aucun problème de compatibilité entre les matériaux respectifs de la gomme de remplissage et de ladite matrice de caoutchouc.

Selon un second mode de réalisation de l'invention, la formulation de la gomme de remplissage peut être choisie différente de la formulation de la matrice de caoutchouc que le câble de l'invention est destiné à renforcer. On pourra notamment ajuster la formulation de la gomme de remplissage en utilisant une quantité relativement élevée de promoteur d'adhésion, typiquement par exemple de 5 à 15 pce d'un sel métallique tel qu'un sel de cobalt, un sel de nickel ou un sel de néodyme, et en réduisant avantageusement la quantité dudit promoteur (voire en le supprimant totalement) dans la matrice de caoutchouc environnante.

De préférence, la gomme de remplissage présente, à l'état réticulé, un module sécant en extension E10 (à 10% d'allongement) qui est compris entre 5 et 25 MPa, plus préférentiellement entre 5 et 20 MPa, en particulier compris dans un domaine de 7 à 15 MPa.

L'homme du métier comprendra que les torons utilisés dans le câble multitorons de l'invention précédemment décrit pourraient être éventuellement gommés in situ avec une gomme de remplissage à base d'élastomères autres que diéniques, notamment d'élastomères thermoplastiques (TPE) tels que par exemple des élastomères polyuréthanne (TPU) ne nécessitant pas de manière connue de réticulation ou vulcanisation mais qui présentent, à la température de service, des propriétés similaires à celles d'un élastomère diénique vulcanisé.

Toutefois, et de manière particulièrement préférentielle, la présente invention est mise en oeuvre avec une gomme de remplissage à base d'élastomères diéniques tels que précédemment décrits, grâce notamment à un procédé de fabrication spécifique qui est particulièrement adapté à de tels élastomères ; ce procédé de fabrication est décrit en détail ci-après.

II-2. Fabrication du câble multitorons de invention

A) Fabrication des torons élémentaires

Les torons élémentaires de construction L+M précédemment décrits, gommés in situ préférentiellement par un élastomère diénique, sont susceptibles d'être fabriqués selon un procédé spécifique comportant les étapes suivantes, opérées préférentiellement en ligne et en continu :

- tout d'abord, lorsque L est différent de 1, une étape d'assemblage par retordage des L fils d'âme, pour formation de la couche interne (Ci) en un point d'assemblage ;
- puis, en aval dudit point d'assemblage des L fils d'âme (lorsque L est différent de 1), une étape de gainage de la couche interne (Ci) par la gomme de remplissage à l'état cru (c'est-à-dire non réticulée) ;
- suivie d'une étape d'assemblage par retordage des M fils de la couche externe (Ce) autour de la couche interne (Ci) ainsi gainée ;
- puis d'une étape finale d'équilibrage des torsions.

On rappelle ici qu'il existe deux techniques possibles d'assemblage de fils métalliques :

- soit par câblage : dans un tel cas, les fils ne subissent pas de torsion autour de leur propre axe, en raison d'une rotation synchrone avant et après le point d'assemblage ;
- soit par retordage : dans un tel cas, les fils subissent à la fois une torsion collective et une torsion individuelle autour de leur propre axe, ce qui génère un couple de détorsion sur chacun des fils et sur le câble lui-même.

Une caractéristique essentielle du procédé ci-dessus est d'utiliser, tant pour l'assemblage de la couche interne Ci (lorsque L est différent de 1) que pour celui de la couche externe Ce, une étape de retordage.

Dans le cas où L est égal à 1, c'est le fil noyau unique qui subit l'étape de gainage de la gomme de remplissage à l'état cru, avant assemblage par retordage des M fils de la couche externe (Ce) autour du fil d'âme ainsi gainé.

Au cours de la première étape, les L fils d'âme sont donc retordus ensemble (direction S ou Z) pour formation de la couche interne Ci, de manière connue en soi ; les fils sont délivrés par des moyens d'alimentation tels que des bobines, une grille de répartition, couplée ou non à un grain d'assemblage, destinés à faire converger les fils d'âme en un point de torsion commun (ou point d'assemblage).

La couche interne (Ci) ainsi formée est ensuite gainée de gomme de remplissage à l'état cru, apportée par une vis d'extrusion à une température appropriée. La gomme de remplissage peut être ainsi délivrée en un point fixe, unique et de faible encombrement, au moyen d'une tête d'extrusion unique, sans faire appel à un gainage individuel des fils en amont des opérations d'assemblage, avant formation de la couche interne, comme décrit dans l'art antérieur.

Ce procédé a l'avantage notable de ne pas ralentir le procédé d'assemblage conventionnel. Il rend possible l'opération complète de retordage initial, gommage et retordage final en ligne et en une seule étape, quel que soit le type de toron produit (toron compact comme toron à couches cylindriques), tout ceci à haute vitesse. Le procédé ci-dessus peut être mis en oeuvre à une vitesse (vitesse de défilement du toron sur la ligne de retordage-gommage) supérieure à 70 m/min, préférentiellement supérieure à 100 m/min.

En amont de la tête d'extrusion, la tension exercée sur le ou les L fil(s), sensiblement identique d'un fil à l'autre, est préférentiellement comprise entre 10 et 25% de la force rupture des fils.

La tête d'extrusion peut comporter une ou plusieurs filières, par exemple une filière amont de guidage et une filière aval de calibrage. On peut ajouter des moyens de mesure et de contrôle en continu du diamètre du toron, reliés à l'extrudeuse. De préférence, la température d'extrusion de la gomme de remplissage est comprise entre 60°C et 120°C, plus préférentiellement comprise entre 70°C et 110°C. La tête d'extrusion définit ainsi une zone de gainage ayant la forme d'un cylindre de révolution dont le diamètre est compris par exemple entre 0,4 mm et 1,2 mm, et dont la longueur est par exemple comprise entre 4 et 10 mm.

La quantité de gomme de remplissage délivrée par la tête d'extrusion peut être ajustée aisément de telle manière que, dans le toron L+M final, cette quantité soit comprise entre 5 et 40 mg, de préférence entre 5 et 35 mg, notamment dans un domaine de 10 à 30 mg par g de toron.

Préférentiellement, en sortie de la tête d'extrusion, la couche interne Ci, en tout point de sa périphérie, est recouverte d'une épaisseur minimale de gomme de remplissage qui est préférentiellement supérieure à 5 $\mu$m, plus préférentiellement supérieure à 10 $\mu$m, par exemple comprise entre 10 et 50 $\mu$m.

En sortie de l'étape de gainage qui précède, au cours d'une nouvelle étape, on procède à l'assemblage final, toujours par retordage (direction S ou Z), des M fils de la couche externe (Ce) autour de la couche interne (Ci) ainsi gainée. Au cours du retordage, les M fils viennent s'appuyer sur la gomme de remplissage, s'incruster dans cette dernière. La gomme de remplissage, en se déplaçant sous la pression exercée par ces fils externes, a alors naturellement tendance à remplir, au moins en partie, chacun des interstices ou cavités laissés vides par les fils, entre la couche interne (Ci) et la couche externe (Ce).

A ce stade, le toron L+M n'est toutefois pas encore terminé : son canal central notamment, délimité par les 3 ou 4 fils d'âme lorsque L est différent de 1 ou 2, n'est pas encore rempli de gomme de remplissage, en tout cas de manière insuffisante pour l'obtention d'une imperméabilité à l'air qui soit acceptable.

L'étape importante qui suit consiste à faire passer le toron, ainsi pourvu de sa gomme de remplissage à l'état cru, à travers des moyens d'équilibrage de torsion pour obtention d'un câble dit équilibré en torsion (c'est-à-dire pratiquement sans torsion résiduelle) ; par "équilibrage de torsion", on entend ici de manière bien connue de l'homme du métier l'annulation des couples de torsion résiduels (ou du retour élastique de détorsion) s'exerçant sur chaque fil du toron, dans la couche interne comme dans la couche externe.

Les outils d'équilibrage de la torsion sont connus de l'homme du métier du retordage ; ils peuvent consister par exemple en des "dresseurs" et/ou des "retordeurs" et/ou des "retordeurs-dresseurs" constitués soit de poulies pour les retordeurs, soit de galets de petit diamètre pour les dresseurs, poulies ou galets à travers lesquels circule le toron, dans un seul plan ou de préférence dans au moins deux plans différents.

On suppose a posteriori que, lors du passage à travers cet outil d'équilibrage, la détorsion s'exerçant sur les L fils d'âme, entraînant une rotation inverse, au moins partielle, de ces derniers autour de leur axe, est suffisante pour forcer, pour entraîner la gomme de remplissage à l'état cru (i.e., non réticulée, non cuite) encore chaude et relativement fluide de l'extérieur vers le coeur du toron, à l'intérieur même du canal central formé par les L fils, offrant finalement aux torons constitutifs du câble multitorons de l'invention l'excellente propriété d'imperméabilité à l'air qui les caractérise. La fonction de dressage en plus, apporté par l'utilisation d'un outil dresseur, aurait pour avantage que le contact des galets du dresseur avec les fils de la couche externe va exercer une pression supplémentaire sur la gomme de remplissage favorisant encore sa pénétration dans le capillaire central formé par les L fils d'âme.

En d'autres termes, le procédé décrit ci-dessus exploite la rotation des L fils d'âme, au stade final de fabrication du toron, pour répartir naturellement, de manière homogène, la gomme de remplissage à l'intérieur et autour de la couche interne (Ci), tout en contrôlant parfaitement la quantité de gomme de remplissage fournie. L'homme du métier saura notamment ajuster l'agencement, le diamètre des poulies et/ou des galets des moyens d'équilibrage de torsion, pour jouer sur l'intensité de la pression radiale s'exerçant sur les différents fils.

Ainsi, de manière inattendue, il s'est avéré possible de faire pénétrer la gomme de remplissage au coeur même de chaque toron élémentaire du câble multitorons de l'invention, en déposant la gomme en aval du point d'assemblage des L fils et non en amont comme décrit dans l'art antérieur, tout en contrôlant et en optimisant la quantité de gomme de remplissage délivrée grâce à l'emploi d'une tête d'extrusion unique.

Après cette étape ultime d'équilibrage de la torsion, la fabrication du toron élémentaire, gommé in situ par sa gomme de remplissage à l'état cru, est terminée. Les torons élémentaires ainsi préparés sont enroulés sur ou plusieurs bobines de réception, pour stockage, avant l'opération ultérieure d'assemblage par retordage des K torons élémentaires, pour l'obtention finale du câble multitorons de l'invention.

Ce procédé de fabrication s'applique bien entendu à la fabrication de torons élémentaires du type compacts (pour rappel et par définition, ceux dont les couches Ci et Ce sont enroulées au même pas et dans le même sens, lorsque L est différent de 1) comme de torons du type à couches cylindriques (pour rappel et par définition, ceux dont les couches Ci et Ce sont enroulées soit à des pas différents, soit dans des sens opposés, soit encore à des pas différents et dans des sens opposés, lorsque L est différent de 1).

Le procédé précédemment décrit rend possible, la fabrication de torons élémentaires et donc de câble multitorons dépourvus de gomme de remplissage à leur périphérie ; par une telle expression, on entend qu'aucune particule de gomme de remplissage n'est visible, à l'oeil nu, à la périphérie de chaque toron élémentaire ni à la périphérie du câble multitorons de l'invention, c'est-à-dire que l'homme du métier ne fait pas de différence en sortie de fabrication, à l'oeil nu et à une distance de trois mètres ou plus, entre une bobine de câble multitorons selon l'invention et une bobine de câble multitorons conventionnel c'est-à-dire non gommé in situ.

Un dispositif d'assemblage et gommage utilisable pour la mise en oeuvre du procédé précédemment décrit est un dispositif comportant d'amont en aval, selon la direction d'avancement d'un toron élémentaire en cours de formation :

- des moyens d'alimentation du ou des L fil(s) d'âme ;
- des moyens d'assemblage par retordage des L fils d'âme, lorsque L est différent de 1, pour formation de la couche interne (Ci) ;
- des moyens de gainage de la couche interne (Ci) ;
- en sortie de moyens de gainage, des moyens d'assemblage par retordage des M fils externes autour de la couche interne ainsi gainée, pour formation de la couche externe (Ce) ;
- enfin, des moyens d'équilibrage de torsion.

On voit sur la figure 7 annexée un exemple de dispositif (100) d'assemblage par retordage, du type à alimentation et réception tournantes, utilisable pour la fabrication d'un toron élémentaire du type à couches cylindriques (pas $p_1$ et $p_2$ différents et/ou sens de torsion différents des couches Ci et Ce), par exemple de construction 3+9 tel qu'illustré à la figure 1. Dans ce dispositif (100), des moyens d'alimentation (110) délivrent L (par exemple trois) fils d'âme (11) à travers une grille (111) de répartition (répartiteur axisymétrique), couplée ou non à un grain d'assemblage (112), au-delà de laquelle convergent les L fils (11) en un point d'assemblage ou point de retordage (113), pour formation de la couche interne (Ci).

La couche interne Ci, une fois formée, traverse ensuite une zone de gainage consistant par exemple en une tête d'extrusion unique (114) à travers laquelle est destinée à circuler la couche interne. La distance entre le point de convergence (113) et le point de gainage (114) est par exemple comprise entre 50 cm et 1 m. Autour de la couche interne Ci ainsi gommée, progressant dans le sens de la flèche, sont ensuite assemblés par retordage les M fils (12) de la couche externe (Ce), par exemple au nombre de neuf, délivrés par des moyens d'alimentation (120). Le toron Ci+Ce ainsi formé est finalement collecté sur une réception tournante (140), après traversée des moyens d'équilibrage de torsion (130) consistant par exemple en un dresseur ou un retordeur-dresseur.

On rappelle ici que, de manière bien connue de l'homme du métier, pour la fabrication d'un toron 3+9 du type compact (pas $p_1$ et $p_2$ identiques et sens de torsion identiques des couches C1 et C2) tel qu'illustré par exemple à la figure 3, on utilisera un dispositif (100) comportant cette fois un seul organe (alimentation ou réception) tournant, et non deux comme schématisé à la figure 7 à titre d'exemple.

B) Fabrication du câble multitorons

Pour la fabrication du câble multitorons de l'invention, on procède de manière connue de l'homme du métier, par retordage des torons élémentaires précédemment obtenus, à l'aide de machines de retordage dimensionnées pour assembler des torons.

Selon un mode de réalisation préférentiel, le procédé de retordage utilisé comporte les étapes connues suivantes (voir par exemple demande précitée WO 2004/003287), pour l'obtention d'un câble multitorons préférentiel du type HE (à haute élongation) :

- enrouler ensemble en hélice les K torons élémentaires en une seule couche, selon un pas transitoire de retordage donné ;
- réaliser un surtordage destiné à réduire ce pas transitoire, c'est-à-dire destiné à augmenter l'angle d'hélice de ladite couche et, par conséquent, la courbure d'hélice de cette dernière, et
- stabiliser par détorsion le câble obtenu pour l'obtention d'un couple résiduel nul.

II-3. Utilisation du câble multitorons en armature sommet de pneumatique

Le câble multitorons de l'invention peut être utilisé pour le renforcement d'articles autres que des pneumatiques, par exemple des tuyaux, des courroies, des bandes transporteuses ; avantageusement, il pourrait être utilisé aussi pour le renforcement de parties des pneumatiques autres que leur armature de sommet, notamment pour le renforcement de l'armature de carcasse de pneumatiques pour véhicules industriels.

Toutefois, comme expliqué en introduction du présent mémoire, le câble de l'invention est particulièrement destiné à une armature de sommet de pneumatique pour véhicules industriels lourds.

A titre d'exemple, la figure 8 représente de manière très schématique une coupe radiale d'un pneumatique à armature de sommet métallique pouvant être conforme ou non à l'invention, dans cette représentation générale.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le pneumatique conforme à l'invention est caractérisé en ce que sa ceinture 6 comporte au moins, à titre de renforcement d'au moins une des nappes de ceinture, un câble multitorons conforme à l'invention. Dans cette ceinture 6 schématisée de manière très simple sur la figure 7, on comprendra que les câbles multitorons de l'invention peuvent par exemple renforcer tout ou partie des nappes de protection, de frettage ou encore de travail. Bien entendu, ce pneumatique 1 comporte en outre de manière connue une couche de gomme ou élastomère intérieure (communément appelée "gomme intérieure") qui définit la face radialement interne du pneumatique et qui est destinée à protéger la nappe de carcasse de la diffusion d'air provenant de l'espace intérieur au pneumatique.

## III. EXEMPLES DE REALISATION DE L'INVENTION

Les essais qui suivent démontrent la capacité de l'invention à fournir des câbles multitorons dont l'endurance, en particulier en ceinture de pneumatique, peut être notablement augmentée grâce à une excellente propriété d'imperméabilité à l'air des torons constitutifs de ces câbles.

III-1. Nature et propriétés des fils et torons utilisés

A titre de torons élémentaires, on utilise dans les essais qui suivent des torons à deux couches de constructions 3+9 tels que schématisés à la figure 1, constitués de fils fins en acier au carbone revêtus de laiton.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm. L'acier utilisé pour le câble C-1 conforme à l'invention est un acier au carbone du type à haute résistance (dit HT pour " High Tensile ") dont la teneur en carbone est de 0,8 % environ.

Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuses.

Les fils en acier ainsi tréfilés ont le diamètre et les propriétés mécaniques suivantes :

**Tableau 1**

| Acier | $\phi$ (mm) | Fm (N) | Rm (MPa) |
|-------|------|--------|----------|
| HT | 0,23 | 128 | 3190 |

Ces fils sont ensuite assemblés sous forme de torons à deux couches de construction 3+9 (référencés 10 à la Fig. 1) et dont les propriétés mécaniques, mesurées sur des torons extraits d'un câble multitorons conforme à l'invention (construction 3 x (3+9) avec un pas $P_K$ égal à 10 mm, tel que schématisé à la Fig. 2), sont données dans le tableau 2 :

**Tableau 2**

| Toron | $p_1$ (mm) | $P_2$ (mm) | Fm (daN) | Rm (MPa) |
|-------|------|------|----------|----------|
| 3+9 | 4 | 6 | 130 | 2710 |

Ce toron 3+9 (10), tel que schématisé à la Fig. 1, est formé de 12 fils au total, tous de diamètre 0,23 mm, qui ont été enroulés à des pas différents et dans la même direction de torsion (S/S) pour l'obtention d'un toron (C-1) du type à couches cylindriques. Le taux de gomme de remplissage, mesuré selon la méthode indiquée précédemment au paragraphe I-3, est de 16 mg par g de toron.

Pour la fabrication de ce toron, on a utilisé un dispositif tel que décrit précédemment et schématisé à la figure 7. La gomme de remplissage est une composition de caoutchouc conventionnelle pour armature sommet de pneumatique. Cette composition a été extrudée à une température de 90°C à travers une filière de calibrage de 0,530 mm.

III-2. Tests de perméabilité à l'air

Les torons (3+9) précédemment fabriqués ont été par ailleurs soumis au test de perméabilité à l'air décrit au paragraphe I-2, sur des longueurs de torons de 3 cm (soit égales à 3 fois $P_K$), en mesurant le volume d'air (en cm$^3$) traversant les torons en 1 minute (moyenne de 10 mesures pour chaque toron testé).

Pour chaque toron (10) testé et pour 100% des mesures (soit dix éprouvettes sur dix), on a mesuré un débit nul ou inférieur à 0,2 cm$^3$/min ; en d'autres termes, les torons des câbles multitorons de l'invention peuvent être qualifiés d'étanches à l'air selon leur axe ; ils présentent donc un taux de pénétration optimal par le caoutchouc.

Par ailleurs, des torons gommés in situ témoins, de même construction que les torons (10) précédents, ont été préparés en gainant individuellement soit un seul fil, soit chacun des trois fils de la couche interne Ci. Ce gainage a été réalisé à l'aide de filières d'extrusion de diamètre variable (280 à 350 μm) disposées cette fois en amont du point d'assemblage (gainage et retordage en ligne) comme décrit dans l'art antérieur (voir demande US 2002/160213 précitée) ; pour une comparaison rigoureuse, on a ajusté d'autre part la quantité de gomme de remplissage de telle manière que le taux de gomme de remplissage, dans les torons finaux (entre 4 et 30 mg/g de toron, mesuré selon la méthode du paragraphe 1-3), soit voisin de celui des torons du câble multitorons de l'invention.

Dans le cas du gainage d'un seul fil, quel que soit le toron testé, on a observé que 100% des mesures (i.e., 10 éprouvettes sur 10) indiquaient un débit d'air supérieur à 2 cm$^3$/min ; le débit moyen mesuré variait de 4 à 15 cm$^3$/min selon les conditions opératoires utilisées, notamment le diamètre de filière d'extrusion testé. En d'autres termes, aucun des torons témoins ci-dessus testés ne peut être qualifié de toron étanche à l'air selon son axe longitudinal, au sens du test du paragraphe I-2.

Dans le cas du gainage individuel de chacun des trois fils, si le débit moyen mesuré s'est révélé dans de nombreux cas inférieur à 2 cm$^3$/min, on a observé toutefois que les torons obtenus présentaient une quantité relativement importante de gomme de remplissage à leur périphérie, les rendant inaptes à une opération de calandrage en conditions industrielles.

En conclusion, grâce à la construction spécifique de ses torons externes constitutifs et l'excellente imperméabilité à l'air qui les caractérise, le câble multitorons de l'invention est apte à présenter une endurance améliorée en fatigue et fatigue-corrosion, tout en satisfaisant aux exigences habituelles de câblage et gommage en conditions industrielles.

**Revendications**

**1.** Câble métallique multitorons , constitué de K torons élémentaires assemblés en hélice chaque toron élémentaire :

- ∘ consistant en un câble à deux couches (Ci, Ce) de construction L+M, gommé in situ, comportant une couche interne (Ci) constituée de L fils de diamètre $d_1$, L variant de 1 à 4, et une couche externe (Ce) de M fils, M étant égal ou supérieur à 5, de diamètre $d_2$ assemblés en hélice selon un pas $p_2$ autour de la couche interne (Ci) ; sa couche interne (Ci) est gainée par une composition de caoutchouc dite "gomme de remplissage" ; chaque toron élémentaire présentant les caractéristiques suivantes ($d_1$, $d_2$ étant exprimés en mm) :

    - 0,10 < $d_1$ < 0,50 :
    - 0,10 < $d_2$ < 0,50 ;

**caractérisé en ce que** chaque toron élémentaire présente les caractéristiques suivantes ($p_2$ étant exprimés en mm) :

    - 3 < p2 < 10 ;
    - les K torons élémentaires étant assemblés en hélice selon un pas d' hélice $P_K$, sur toute longueur de toron élémentaire égale à K fois $P_K$, la gomme de remplissage est présente dans chacun des capillaires délimités par les L fils de la couche interne (Ci) et les M fils de la couche externe (Ce), ainsi que, lorsque L est égal à 3 ou 4, dans le canal central délimité par les L fils de la couche interne (Ci) ;
    - le taux de gomme de remplissage dans ledit toron élémentaire est compris entre 5 et 40 mg par g de toron élémentaire ;
    - chaque toron élémentaire est dépourvu de gomme de remplissage à sa périphérie ;
    et **en ce que** le câble est à une seule couche et de construction K x (L+M).

**2.** Câble selon la revendication 1, dans lequel, dans chaque toron élémentaire, les caractéristiques suivantes sont vérifiées :

- $0,15 < d_1 < 0,35$;
- $0,15 < d_2 < 0,35$.

3. Câble selon la revendication 1 ou 2 dans lequel, dans chaque toron élémentaire, $p_2$ est compris dans un domaine de 4 à 8 mm.

4. Câble selon l'une quelconque des revendications 1 à 3, dans lequel $P_K$ est compris entre 3 et 15 mm, de préférence dans un domaine de 4 à 12 mm.

5. Câble selon l'une quelconque des revendications 1 à 4 dans lequel, dans chaque toron élémentaire, L est égal à 1 et M est égal à 5, 6 ou 7.

6. Câble selon l'une quelconque des revendications 1 à 4 dans lequel, dans chaque toron élémentaire, L est différent de 1 et les L fils de diamètre $d_1$ sont enroulés en hélice selon un pas $p_1$ vérifiant la relation :

$$0,5 \leq p_1/p_2 \leq 1.$$

7. Câble selon la revendication 6 dans lequel, dans chaque toron élémentaire, $p_1$ est compris entre 3 et 10 mm.

8. Câble selon la revendication 6 ou 7 dans lequel, dans chaque toron élémentaire, $p_1$ est égal à $p_2$.

9. Câble selon l'une quelconque des revendications 1 à 8 dans lequel, dans chaque toron élémentaire, la couche externe est une couche saturée.

10. Câble selon l'une quelconque des revendications 1 à 9, dans lequel les K torons élémentaires sont enroulés en hélice dans le même sens de torsion que le sMfils de la couche externe (Ce) de chaque toron élémentaire.

11. Câble selon l'une quelconque des revendications 1 à 10 dans lequel, dans chaque toron élémentaire, le caoutchouc de la gomme de remplissage est un caoutchouc diénique, préférentiellement choisi dans le groupe constitué parles polybutadiènes, le caoutchouc naturel, les polyisoprènes de synthèse, les copolymères de butadiène, les copolymères d'isoprène, et les mélanges de ces élastomères

12. Câble selon l'une quelconque des revendications 1 à 11 dans lequel, dans chaque toron élémentaire, le taux de gomme de remplissage est compris entre 5 et 35 mg par g de toron élémentaire.

13. Câble selon l'une quelconque des revendications 1 à 12, **caractérisé en ce que**, au test de perméabilité à l'air selon le paragraphe I-2, chaque toron élémentaire présente un débit d'air moyen inférieur à 2 cm$^3$/min, de préférence inférieur ou au plus égal à 0,2 cm$^3$/min.

14. Câble selon l'une quelconque des revendications 1 à 13, dans lequel K est égal à 3, 4 ou 5 de préférence égal à 3.

15. Pneumatique comportant un câble selon l'une quelconque des revendications 1 à 14, ledit câble étant présent dans la ceinture du pneumatique.


**Patentansprüche**

1. Mehrlitziges Metallseil, das aus K Einzellitzen besteht, die schraubenförmig verbunden sind, wobei jede Einzellitze:

- aus einem Seil mit zwei Schichten (Ci, Ce) mit L+M-Aufbau besteht, das vor Ort gummiert wird und eine Innenlage (Ci), die aus L Drähten mit einem Durchmesser $d_1$ besteht, wobei L von 1 bis 4 variiert, und eine Außenlage (Ce) mit M Drähten, wobei M größer gleich 5 ist, mit einem Durchmesser $d_2$ umfasst, die schraubenförmig gemäß einer Steigung $p_2$ um die Innenlage (Ci) verbunden sind; wobei seine Innenlage (Ci) durch eine "Füllgummi" genannte Kautschukzusammensetzung ummantelt ist; wobei jede Einzellitze die folgenden Charakteristika aufweist ($d_1$, $d_2$ sind in mm ausgedrückt):
- $0, 10 < d_1 < 0,50$;
- $0,10 < d_2 < 0,50$,
**dadurch gekennzeichnet, dass** jede Einzellitze die folgenden Charakteristika aufweist ($p_2$ ist in mm ausge-

drückt):
- $3 < p_2 < 10$;
- mit den gemäß einer Schraubensteigung $P_k$ schraubenförmig verbundenen K Einzellitzen liegt das Füllgummi über jegliche Länge einer Einzellitze, die gleich K mal $P_K$ ist, in jeder der Kapillaren, die von den L Drähten der Innenlage (Ci) und den M Drähten der Außenlage (Ce) begrenzt werden, sowie, wenn L gleich 3 oder 4 ist, in dem zentralen Kanal vor, der von den L Drähten der Innenlage (Ci) begrenzt wird;
- der Füllgummigehalt liegt in der Einzellitze zwischen 5 und 40 mg pro g Einzellitze;
- jede Einzellitze ist in ihrem Umfang frei von Füllgummi;
und dass das Seil aus einer einzelnen Lage und mit Kx(L+M)-Aufbau ist.

2. Seil nach Anspruch 1, wobei in jeder Einzellitze die folgenden Charakteristika erfüllt sind:

   - $0,15 < d_1 < 0,35$;
   - $0,15 < d_2 < 0,35$.

3. Seil nach Anspruch 1 oder 2, wobei in jeder Einzellitze $p_2$ in einem Bereich von 4 bis 8 mm liegt.

4. Seil nach einem der Ansprüche 1 bis 3, wobei $P_K$ zwischen 3 und 15 mm, vorzugsweise in einem Bereich von 4 bis 12 mm liegt.

5. Seil nach einem der Ansprüche 1 bis 4, wobei in jeder Einzellitze L gleich 1 ist und M gleich 5, 6 oder 7 ist.

6. Seil nach einem der Ansprüche 1 bis 4, wobei in jeder Einzellitze L sich von 1 unterscheidet und die L Drähte mit dem Durchmesser $d_1$ schraubenförmig gemäß einer Steigung $p_1$ gewickelt sind, wobei das folgende Verhältnis erfüllt ist:

$$0,5 \le p_1 \,/\, p_2 \le 1.$$

7. Seil nach Anspruch 6, wobei in jeder Einzellitze $p_1$ zwischen 3 und 10 mm liegt.

8. Seil nach Anspruch 6 oder 7, wobei in jeder Einzellitze $p_1$ gleich $p_2$ ist.

9. Seil nach einem der Ansprüche 1 bis 8, wobei in jeder Einzellitze die Außenlage eine gesättigte Lage ist.

10. Seil nach einem der Ansprüche 1 bis 9, wobei die K Einzellitzen in der gleichen Drehungsrichtung wie die M Drähte der Außenlage (Ce) jeder Einzellitze schraubenförmig gewickelt sind.

11. Seil nach einem der Ansprüche 1 bis 10, wobei in jeder Einzellitze der Kautschuk des Füllgummis vorzugsweise ein Dienkautschuk ist, der aus der Gruppe bestehend aus Polybutadienen, Naturkautschuk, synthetischen Polyisoprenen, Butadiencopolymeren, Isoprencopolymeren und Gemischen dieser Elastomere ausgewählt ist.

12. Seil nach einem der Ansprüche 1 bis 11, wobei der Füllgummigehalt in jeder Einzellitze zwischen 5 und 35 mg pro Einzellitze liegt.

13. Seil nach einem der Ansprüche 1 bis 12, **dadurch gekennzeichnet, dass** im Luftdurchlässigkeitstest (gemäß Absatz 1-2) jede Einzellitze einen mittleren Luftdurchsatz von weniger als 2 cm$^3$/min, vorzugsweise weniger oder höchstens gleich 0,2 cm$^3$/min aufweist.

14. Seil nach einem der Ansprüche 1 bis 13, wobei K 3, 4 oder 5, vorzugsweise 3, beträgt.

15. Reifen mit einem Seil nach einem der Ansprüche 1 bis 14, wobei das Seil im Reifengürtel vorliegt.

**Claims**

1. Multistrand metal cord consisting of K elementary strands assembled in a helix, each elementary strand:

    o consisting of a cord having two layers (Ci, Ce) of L+M construction, rubberized *in situ,* comprising an inner layer (Ci) consisting of L wires of diameter $d_1$, L varying from 1 to 4, and an outer layer (Ce) of M wires, M being equal to or greater than 5, of diameter $d_2$, which are assembled in a helix with a pitch $p_2$ around the inner layer (Ci); its inner layer (Ci) is sheathed with a rubber composition called a "filling rubber"; each elementary strand having the following characteristics ($d_1$, $d_2$ being expressed in mm):

    - $0.10 < d_1 < 0.50$;
    - $0.10 < d_2 < 0.50$;

    **characterized in that** each elementary strand has the following characteristics ($p_2$ being expressed in mm):

    - $3 < p_2 < 10$;
    - said K elementary strand being assembled in a helix with a helix pitch $P_K$, over any length of the elementary strand equal to K times $P_K$, the filling rubber is present in each of the capillaries delimited by the L wires of the inner layer (Ci) and the M wires of the outer layer (Ce), and also, when L is equal to 3 or 4, in the central channel delimited by the L wires of the inner layer (Ci); and
    - the amount of filling rubber in said elementary strand is between 5 and 40 mg per g of elementary strand;
    - each elementary strand has no filling rubber on its periphery ;
    and **in that** the cord is a one layer cord and of the Kx(L+M) construction.

2. Cord according to Claim 1, in which, in each elementary strand, the following characteristics are satisfied:

    - $0.15 < d_1 < 0.35$;
    - $0.15 < d_2 < 0.35$.

3. Cord according to Claim 1 or 2, in which, in each elementary strand, $p_2$ is in the range from 4 to 8 mm.

4. Cord according to any one of Claims 1 to 3, in which $P_K$ is between 3 and 15 mm, preferably in the range from 4 to 12 mm.

5. Cord according to any one of Claims 1 to 4, in which, in each elementary strand, L is equal to 1 and M is equal to 5, 6 or 7.

6. Cord according to any one of Claims 1 to 4, in which, in each elementary strand, L is different from 1 and the L wires of diameter $d_1$ are helically wound with a pitch $p_1$ satisfying the relationship:

$$0.5 \leq p_1/p_2 \leq 1.$$

7. Cord according to Claim 6, in which, in each elementary strand, $p_1$ is between 3 and 10 mm.

8. Cord according to Claim 6 or 7, in which, in each elementary strand, $p_1$ is equal to $P_2$.

9. Cord according to any one of Claims 1 to 8, in which, in each outer strand, the elementary layer is a saturated layer.

10. Cord according to any one of Claims 1 to 9, in which the K elementary strands are wound in a helix in the same twist direction as the M wires of the outer layer (Ce) of each elementary strand.

11. Cord according to any one of Claims 1 to 10, in which, in each elementary strand, the rubber of the filling rubber is a diene rubber, preferably is chosen from the group formed by polybutadienes, natural rubber, synthetic polyisoprenes, butadiene copolymers, isoprene copolymers and the blends of these elastomers.

12. Cord according to any one of Claims 1 to 11, in which, in each elementary strand, the amount of filling rubber is between 5 and 35 mg per g of elementary strand.

13. Cord according to any one of Claims 1 to 12, **characterized in that**, in the air permeability test (paragraph I-2), each elementary strand has an average air flow rate of less than 2 cm$^3$/min, preferably less than or at most equal to 0.2 cm$^3$/min.

14. Cord according to any one of Claims 1 to 13, in which K is equal to 3, 4 or 5, preferably equal to 3.

15. Tyre comprising a cord according to any one of Claims 1 to 14, said multistrand cord being present in the belt of the tyre.

## Fig. 1

## Fig. 2

## Fig. 3

## Fig. 4

## Fig. 5

## Fig. 6

Fig. 7

# Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1000074 A
- US 6475636 B
- US 7458200 B
- WO 2004003287 A
- US 20050183808 A
- WO 2004033789 A
- US 7089726 B
- WO 0100922 A
- WO 0149926 A
- WO 2005071157 A
- WO 2006013077 A
- US 2002160213 A
- WO 2009011397 A
- WO 2005113666 A

**Littérature non-brevet citée dans la description**

- *RD,* Juin 1992, 488-492